# EUROPÄISCHE PATENTSCHRIFT

(11) **EP 0 563 443 B1**
(45) Veröffentlichungstag und Bekanntmachung des Hinweises auf die Patenterteilung: **13.09.1995**
(21) Anmeldenummer: 92118707.6
(22) Anmeldetag: 02.11.1992
(51) Int. Cl.: F16H 55/36

(54) **Riemenscheibe**
Pulley
Poulie

(30) Priorität: 30.03.1992 DE 4210345
(43) Veröffentlichungstag der Anmeldung: 06.10.1993
(73) Patentinhaber: Firma Carl Freudenberg, 69469 Weinheim (DE)
(72) Erfinder: Gesenhues, Bernhard, Dr., W-6943 Birkenau (DE); Weinlein, Roger, W-6806 Viernheim (DE)

(56) Entgegenhaltungen:
- DE-A- 2 833 458
- GB-A- 2 077 387
- US-A- 4 002 081
- PATENT ABSTRACTS OF JAPAN vol. 8, no. 284 (M-348)26. Dezember 1984 & JP-A-59 151 664 (NABEYA KOGYO K.K.) 30. August 1984
- 'INDUSTRIAL FASTENERS HANDBOOK' 1985 , TRADE AND TECHNICAL PRESS , MORDEN,GB 3. Ausgabe

## Beschreibung

Die Erfindung betrifft eine Riemenscheibe, umfassend zumindest einen Riemenscheibenkörper mit einer Riemenlauffläche, die in axialer Richtung durch zumindest eine separat montierbare Bordscheibe begrenzt ist, wobei die Bordscheibe die Riemenlauffläche in radialer Richtung überragt, konzentrisch und unverdrehbar zu dieser angeordnet ist und gemeinsam mit der Riemenlauffläche um eine Drehachse bewegbar ist, wobei die Bordscheibe auf einem der Riemenlauffläche in axialer Richtung benachbarten Vorsprung angeordnet ist, wobei der Vorsprung einstückig mit dem Riemenscheibenkörper ausgebildet ist und wobei die Bordscheibe durch eine nur im Bereich ihres Innendurchmessers elastisch aufgeweitete Federscheibe gebildet ist, die den Vorsprung in Umfangsrichtung zumindest teilweise anliegend berührt.

Eine solche Riemenscheibe ist aus der JP-A- 59-151664 bekannt. Die Federscheibe berührt den Vorsprung im Bereich ihres Innendurchmessers entlang einer im wesentlichen kreisförmigen Umfangslinie durchgehend, wobei die vorbekannte Federscheibe mit nur einer einzigen Federzunge ausgebildet ist. Die Sicherheit gegen eine relative Verdrehung der Federscheibe auf dem Vorsprung ist wenig zufriedenstellend.

Der Erfindung liegt die Aufgabe zugrunde, eine Riemenscheibe der eingangs genannten Art derart weiterzuentwickeln, daß eine gute Sicherheit der Federscheibe gegen Verdrehung auf dem Riemenscheibenkörper geschaffen wird.

Diese Aufgabe wird mit den kennzeichnenden Merkmalen von Anspruch 1 gelöst. Auf vorteilhafte Ausgestaltungen nehmen die Unteransprüche Bezug.

Bei der erfindungsgemäßen Riemenscheibe ist es vorgesehen, daß die Federscheibe den Vorsprung mit in Umfangsrichtung verteilten Federzungen berührt. Hierbei ist von Vorteil, daß durch die Federwirkung der elastisch aufgeweiteten Federscheibe eine einfache Montage der Bordscheibe gewährleistet ist. Durch ein einfaches Aufpressen der Bordscheibe in Montagerichtung auf den Riemenscheibenkörper entsteht ein fester Verbund, der gute Gebrauchseigenschaften der Riemenscheibe während einer langen Gebrauchsdauer gewährleistet.
die Federscheibe weist eine vergleichsweise geringe Trägheitsmasse auf, und Fertigungstoleranzen sowohl der Federscheibe als auch des Vorsprungs können besser ausgeglichen werden. Die guten Gebrauchseigenschaften der Riemenscheibe sind von hervorzuhebender Bedeutung. Einer Verdrehung auf dem Vorsprung des Riemenscheibenkörpers wird vorgebeugt.

Für die meisten Anwendungsfälle wird es ausreichend sein, daß die Federscheibe nur durch die in radialer Richtung gerichtete Vorspannung gegen Umfangsverdrehungen auf dem Vorsprung der Riemenscheibe gesichert ist. Eine zusätzliche Sicherheit gegen eine Verdrehung der Federscheibe auf dem Vorsprung des Riemenscheibenkörpers kann dadurch gegeben sein, daß die Federzungen in in axialer Richtung verlaufenden Nuten des Vorsprungs angeordnet sind. Die Federzungen bewirken einerseits eine Verkrallung im Nutgrund und dadurch eine Vermeidung von axialen Verlagerungen der Federscheibe. Durch die Führung der Federzungen in Umfangsrichtung wird eine Relativverdrehung von Federscheibe zu Riemenscheibenkörper zuverlässig verhindert.

Gemäß einer vorteilhaften Ausgestaltung ist es vorgesehen, daß die Federscheibe aus einem metallischen Werkstoff gebildet ist und entlang ihres Innendurchmessers gleichmäßig verteilte, in Richtung des Vorsprungs offene, im wesentliche U-förmige Durchbrechungen aufweist. Kerbspannungen können durch diese Ausgestaltung reduziert/vermieden werden. Auch während der bestimmungsgemäßen Verwendung der Riemenscheibe kann der Bildung von Haarrissen im Bereich der radialen Übergangszone zwischen Federzungen und Anschlagflächen der Federzungen vorgebeugt werden.

Die Anzahl der Federzungen und der Durchbrechungen sollte wenigstens drei betragen. In Abhängigkeit von der Größe der Riemenscheibe ist eine sinnvolle Anzahl von Federzungen/Durchbrechungen zu wählen, so daß einerseits eine sichere Festlegung der Bordscheibe am Riemenscheibenkörper gewährleistet ist und andererseits die Herstellbarkeit der Bordscheibe sowie deren Montage möglichst einfach erfolgen kann.

In Abhängigkeit von den jeweiligen Gegebenheiten der Anwendungsfalles können die Durchbrechungen eine radiale Tiefe aufweisen, die 0,01 bis 0,5 mal so groß ist, wie die radiale Dicke der Bordscheibe. Vorteilhafterweise beträgt die radiale Tiefe 1 mm bis 10 mm. Die Ausgestaltung der Federzungen/Durchbrechungen hat Einfluß auf die radiale Vorspannung der Federzungen, die sich entlang einer sich im wesentlichen kreisförmigen Umfangslinie auf dem Vorsprung abstützen.

Die durch die Durchbrechungen gebildeten Federzungen können herstellungsbedingt axial entgegen der Montagerichtung, die sich parallel zu der Drehachse erstreckt, abgewinkelt sein und mit der Drehachse einen Winkel von 45 bis 89°, bevorzugt von 65 bis 85° einschließen. Durch die Federwirkung der Federzungen radial in Richtung des Vorsprungs ergibt sich eine Verzahnung zwischen diesen beiden Bauteilen. Der Widerhakeneffekt bewirkt, daß die Federzungen bei der Montage der Bordscheibe auf den Vorsprung von diesem radial elastisch nach außen aufgeweitet werden. Wenn der Aufpreßvorgang beendet ist und die Bordscheibe die axiale Begrenzung der Riemenlauffläche bildet, besteht zwischen den Federzungen und dem Vorsprung des Riemenscheibenkörpers eine mechanische Verkrallung, die verhindert, daß die Bordscheibe in axialer Richtung entgegen der Montagerichtung während der bestimmungsgemäßen Verwendung zu wandern beginnt.

Gemäß einer vorteilhaften Ausgestaltung ist es vorgesehen, daß der Riemenscheibenkörper aus einem Polymeren Werkstoff gebildet ist. Durch den im Vergleich zum Werkstoff der Federzungen weicheren Werkstoff des Riemenscheinbenkörpers und damit des Vorsprungs wird die Verkrallung der Bordscheibe auf dem Riemenscheibenkörper weiter begünstigt. Die Federscheibe besteht zumeist aus einem gehärteten Federstahl. Nach einer anderen Ausgestaltung kann es vorgesehen sein, daß der Riemenscheibenkörper aus metallischem Werkstoff besteht. Dabei ist allerdings zu beachten, daß die Federzungen bei montierter Bordscheibe beispielsweise in eine in Umfangsrichtung offene, nutförmige Vertiefung des Riemenscheibenkörpers einschnappbar sind, um gegen eine axiale Verlagerung gesichert zu sein.

Aufgrund des geringeren Fertigungsaufwandes und einer geringeren Trägheitsmasse gelangen im Rahmen der vorliegenden Erfindung jedoch bevorzugt Riemenscheibenkörper zur Anwendung, die aus polymerem Werkstoff bestehen.

Die Montage der Bordscheibe kann dadurch, daß der Vorsprung einen im Vergleich zur Riemenlauffläche abgesetzt verringerten Außendurchmesser aufweist, weiter vereinfacht werden. Durch diesen Absatz ist eine Anschlagfläche für die Federscheibe gebildet, so daß eine gleichbleibende axiale Breite der Riemenlauffläche während der Montage großer Stückzahlen besonders einfach sichergestellt ist.

Um die Federscheibe in Montagerichtung besonders einfach und konzentrisch auf den Vorsprung des Riemenscheibenkörpers aufschieben zu können, ist es vorgesehen, daß der Vorsprung auf der der Riemenlauffläche in axialer Richtung abgewandten Seite eine Anphasung aufweist, die mit der Drehachse einen Winkel von 5° bis 35° einschließt.

Die Erfindung wird nachfolgend anhand der in der Anlage beigefügten Zeichnungen weiter verdeutlicht. Es zeigen:

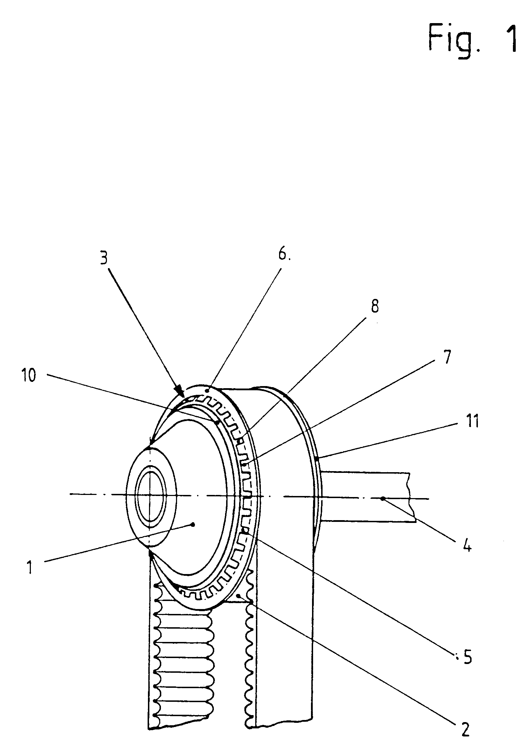

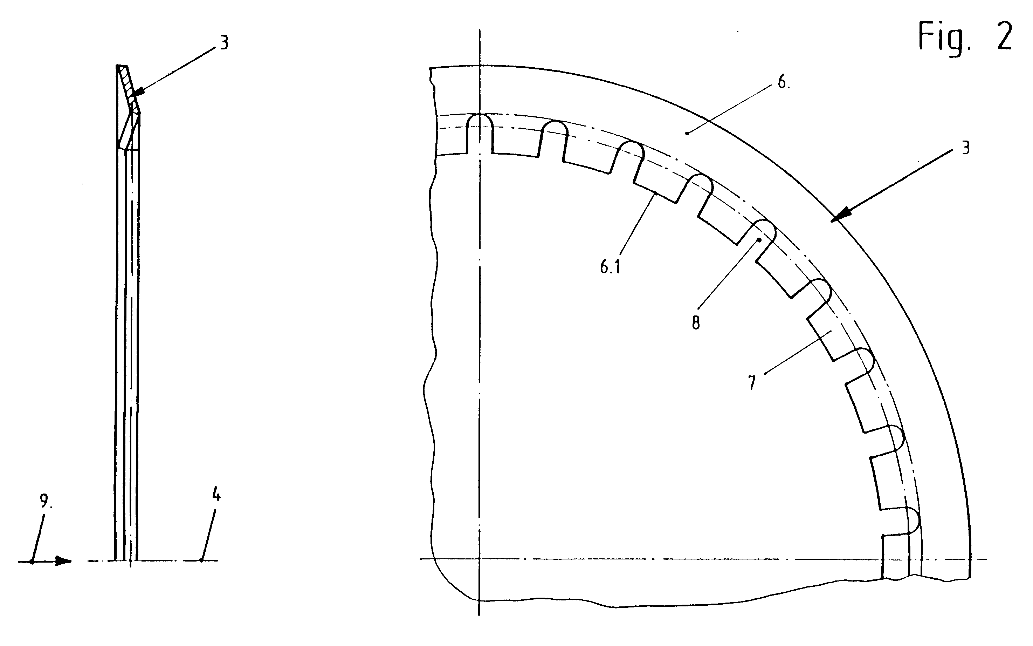

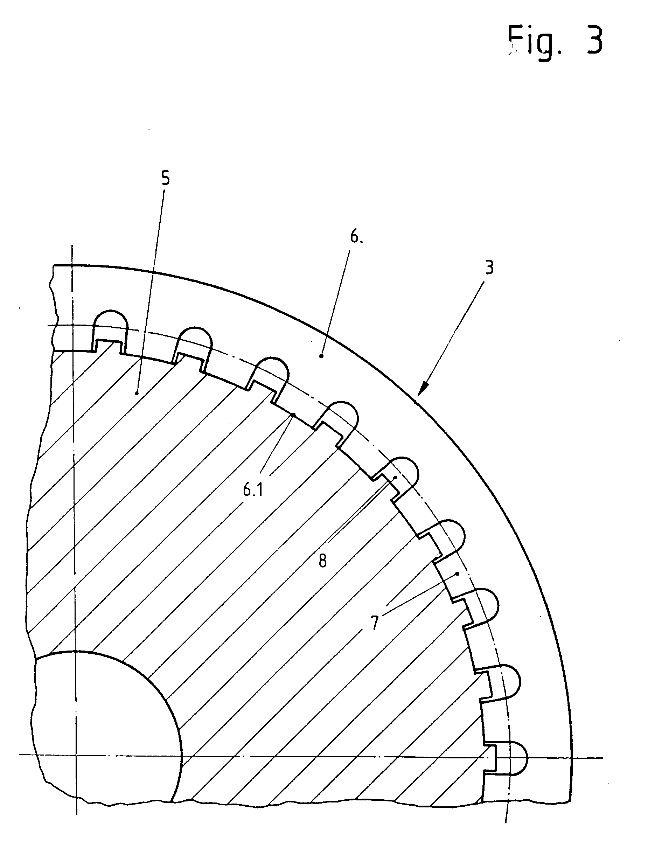

Figur 1 eine erfindungsgemäße Riemenscheibe in einer perspektivischen Ansicht und Figur 2 eine Federscheibe, die als Bordscheibe zur Anwendung gelangt. In Figur 3 ist eine in Umfangsrichtung verdrehgesicherte Federscheibe auf einem mit Axialnuten versehenen Vorsprung angeordnet.

In Figur 1 ist ein Ausführungsbeispiel einer Riemenscheibe gezeigt, umfassend einen Riemenscheibenkörper 1 aus polymerem Werkstoff mit einer in axialer Richtung einstückig an diesen angeformten Bordscheibe 11. Die Riemenlauffläche 2 ist in axialer Richtung andererseits durch eine separate montierbare Bordscheibe 3 in Form einer Federscheibe 6 gebildet. Die Bordscheiben 3, 11 überragen die Riemenlauffläche und den aufgelegten Riemen in radialer Richtung, so daß Axialverlagerungen des Riemens während der bestimmungsgemäßen Verwendung ausgeschlossen werden. Die separat montierbare Bordscheibe 3 ist auf einem Vorsprung 5 angeordnet, der der Riemenlauffläche 2 axial benachbart zugeordnet ist. Der Vorsprung 5 ist einstückig mit dem Riemenscheibenkörper 1 ausgebildet und besteht in diesem Ausführungsbeispiel aus polymerem Werkstoff. Die Bordscheibe 3 ist durch eine Federscheibe 6 gebildet, die nur im Bereich ihres Innendurchmessers 6.1 elastisch aufgeweitet ist und den Vorsprung 5 mit in Umfangsrichtung gleichmäßig verteilten Federzungen 7 unter radialer Vorspannung berührt. Die Federzungen 7 sind axial entgegen der Montagerichtung 9 gekröpft und schließen mit der Drehachse 4 in diesem Ausführungsbeispiel einen Winkel von 80° ein. Der herstellungsbedingte Innendurchmesser 6.1 der Federscheibe 6 ist kleiner als der Außendurchmesser des Vorsprungs 5, so daß sich nach der Montage der Federscheibe 6 auf dem Vorsprung 5 eine mechanische Verkrallung der Federzungen 7 in der Oberfläche des Vorsprungs 5 ergibt. Die Federscheibe 6 ist besonders einfach und kostengünstig auch in großen Stückzahlen zu fertigen und bewirkt eine zuverlässige axiale Begrenzung der Riemenlauffläche durch den Widerhakeneffekt der Federzungen 7 auf dem Vorsprung 5. Die Montage erfolgt durch einfaches axiales Aufpressen der Federscheibe 6 auf den Vorsprung 5. Die Federscheibe 6 wird in axialer Richtung so lange über die Oberfläche des Vorsprungs 5 gedrückt, bis sie sich an einen Absatz, der die axiale Begrenzungsfläche der Riemenlauffläche 2 in radialer Richtung bildet, anlegt. Die Montage ist dadurch besonders einfach.

In Figur 2 ist ein Beispiel einer Bordscheibe 3 in Form einer Federscheibe 6 als Einzelteil in vergrößertem Maßstab dargestellt. Die Federscheibe 6 weist im Bereich ihres Innendurchmessers 6.1 elastisch aufweitbare Federzungen 7 auf, die in axialer Richtung entgegen der Montagerichtung 9 gekröpft sind und mit einer gedachten Radialebene einen Winkel von 20° einschließen. Die Anlauffläche der Federscheibe 6 für den zur Anwendung gelangenden Riemen schließt mit der Radialebene in diesem Beispiel einen Winkel von 15° ein, so daß sich mit zunehmender radialer Weite, von der Riemenlauffläche ausgehend, eine Erweiterung in axialer Richtung ergibt.

In Figur 3 ist ein Ausführungsbeispiel einer Federscheibe 6 gezeigt, die entlang ihres Innendurchmessers 6.1 gleichmäßig verteilte Federzungen 7 aufweist. Die Federzungen 7 sind zur Sicherung der Federscheibe 6 gegen Verdrehung auf dem Vorsprung 5 in Nuten geführt, die sich in axialer Richtung entlang des Vorsprungs 5 erstrecken. Die Federzungen 7 liegen im Bereich ihres Innendurchmessers 6.1 im Nutgrund der Nuten unter radialer Vorspannung an. Die Federscheibe 6 ist dadurch in ausgezeichneter Weise sowohl vor axialen Verlagerungen als auch vor Verdrehungen auf dem Vorsprung geschützt.

## Patentansprüche

1. Riemenscheibe, umfassend zumindest einen Riemenscheibenkörper (1) mit einer Riemenlauffläche (2), die in axialer Richtung durch zumindest eine separat montierbare Bordscheibe (3) begrenzt ist, wobei die Bordscheibe (3) die Riemenlauffläche (2) in radialer Richtung überragt, konzentrisch und unverdrehbar zu dieser angeordnet ist und gemeinsam mit der Riemenlauffläche (2) um eine Drehachse (4) bewegbar ist, wobei die Bordscheibe (3) auf einem der Riemenlauffläche (2) in axialer Richtung benachbarten Vorsprung (5) angeordnet ist, wobei der Vorsprung (5) einstückig mit dem Riemenscheibenkörper (1) ausgebildet ist und wobei die Bordscheibe (3) durch eine nur im Bereich ihres Innendurchmessers (6.1) elastisch aufgeweitete Federscheibe (6) gebildet ist, die den Vorsprung (5) in Umfangsrichtung zumindest teilweise anliegend berührt, dadurch gekennzeichnet, daß die Federscheibe (6) den Vorsprung (5) mit in Umfangsrichtung verteilten Federzungen (7) berührt.

2. Riemenscheibe nach Anspruch 1, dadurch gekennzeichnet, daß die Federzungen (7) in in axialer Richtung verlaufenden Nuten des Vorsprungs (5) angeordnet sind.

3. Riemenscheibe nach einem der Ansprüche 1 oder 2, dadurch gekennzeichnet, daß die Federscheibe (6) aus einem metallischen Werkstoff gebildet ist und entlang ihres Innendurchmessers (6.1) gleichmäßig verteilte, in Richtung des Vorsprungs (5) offene, im wesentlichen U-förmige Durchbrechungen (8) aufweist.

4. Riemenscheibe nach einem der Ansprüche 1 bis 3, dadurch gekennzeichnet, daß die Anzahl der Federzungen (7) und der Durchbrechungen (8) wenigstens drei beträgt.

5. Riemenscheibe nach einem der Ansprüche 3 oder 4, dadurch gekennzeichnet, daß die Durchbrechungen (8) eine radiale Tiefe aufweisen, die 0,01 bis 0,5 mal so groß ist, wie die radiale Dicke der Bordscheibe (3).

6. Riemenscheibe nach Anspruch 5, dadurch gekennzeichnet, daß die radiale Tiefe 1 mm bis 10 mm beträgt.

7. Riemenscheibe nach einem der Ansprüche 1 bis 6, dadurch gekennzeichnet, daß die durch die Durchbrechungen (8) gebildeten Federzungen (7) herstellungsbedingt axial entgegen der Montagerichtung (9), die sich parallel zu der Drehachse (4) ersteckt, abgewinkelt sind und mit der Drehachse (4) einen Winkel von 45 bis 89° einschließen.

8. Riemenscheibe nach Anspruch 7, dadurch gekennzeichnet, daß der Winkel 65 bis 85° beträgt.

9. Riemenscheibe nach einem der Ansprüche 1 bis 8, dadurch gekennzeichnet, daß der Riemenscheibenkörper (1) aus polymerem Werkstoff gebildet ist.

10. Riemenscheibe nach einem der Ansprüche 1 bis 9, dadurch gekennzeichnet, daß der Vorsprung (5) einen im Vergleich zur Riemenlauffläche (2) abgesetzt verringerten Außendurchmesser aufweist.

11. Riemenscheibe nach Anspruch 10, dadurch gekennzeichnet, daß der Vorsprung (5) auf der der Riemenlauffläche (2) in axialer Richtung abgewandten Seite eine Anphasung (10) aufweist, die mit der Drehachse (4) einen Winkel von 5 bis 35° einschließt.

## Claims

1. A pulley, comprising at least one pulley body (1) with a belt running surface (2) which is limited in the axial direction by at least one separately mountable flanged disc (3), the flanged disc (3) projecting beyond the belt running surface (2) in the radial direction, being arranged concentrically and non-rotatably relative to the latter and being movable jointly with the belt running surface (2) about an axis of rotation (4), the flanged disc (3) being arranged on a projection (5) adjacent to the belt running surface (2) in the axial direction, the projection (5) being made in one piece with the pulley body (1), and the flanged disc (3) being formed by a spring washer (6) which is widened elastically only in the region of its inside diameter (6.1) and which touches the projection (5) in a circumferential direction so as to bear at least partially on the latter, characterized in that the spring washer (6) touches the projection (5) with spring tongues (7) distributed in the circumferential direction.

2. A pulley according to claim 1, characterized in that the spring tongues (7) are arranged in grooves of the projection (5) which extend in the axial direction.

3. A pulley according to any one of claims 1 or 2, characterized in that the spring washer (6) is formed from a metallic material and has essentially U-shaped perforations (8) distributed uniformly along its inside diameter (6.1) and open in the direction of the projection (5).

4. A pulley according to any one of claims 1 to 3, characterized in that the number of spring tongues (7) and of perforations (8) is at least three.

5. A pulley according to any one of claims 3 or 4, characterized in that the perforations (8) have a radial depth which is 0.01 to 0.5 times as large as the radial thickness of the flanged disc (3).

6. A pulley according to claim 5, characterized in that the radial depth is 1 mm to 10 mm.

7. A pulley according to any one of claims 1 to 6, characterized in that, as a consequence of manufacture, the spring tongues (7) formed by the perforations (8) are angled axially opposite to the mounting direction (9), which extends parallel to the axis of rotation (4), and form an angle of 45 to 89° with the axis of rotation (4).

8. A pulley according to claim 7, characterized in that the angle is 65 to 85°.

9. A pulley according to any one of claims 1 to 8, characterized in that the pulley body (1) is formed from polymeric material.

10. A pulley according to any one of claims 1 to 9, characterized in that the projection (5) has an outside diameter reduced in a stepped manner in comparison with the belt running surface (2).

11. A pulley according to claim 10, characterized in that the projection (5) has, on the side facing away from the belt running surface (2) in the axial direction, a chamfer (10) which forms an angle of 5 to 35° with the axis of rotation (4).

## Revendications

1. Poulie, comportant au moins un corps de poulie (1) muni d'une surface de roulement (2), laquelle est limitée dans le sens axial par au moins une poulie à rebord (3) pouvant être montée séparément, étant précisé que la poulie à rebord (3) dépasse la surface de roulement (2) dans le sens radial, est disposée de manière concentrique et sans torsion par rapport à celle-ci et est mobile avec la surface de roulement (2) autour d'un axe de révolution (4), que la poulie à rebord (3) est disposée sur une saillie (5) adjacente à la surface de roulement (2) dans le sens axial, la saillie (5) étant conçue de manière à former une seule pièce avec le corps de poule (1), et que la poule à rebord (3) est formée par une rondelle élastique (6) qui n'est élargie élastiquement qu'au niveau de son diamètre intérieur (6.1) et qui touche la saillie (5) au moins partiellement dans le sens circonférentiel, caractérisée en ce que la rondelle élastique (6) touche la saillie (5) avec des languettes élastiques (7) réparties dans le sens circonférentiel.

2. Poulie selon la revendication 1, caractérisée en ce que les languettes élastiques (7) sont disposées dans des rainures de la saillie (5), qui s'étendent dans le sens axial.

3. Poulie selon l'une quelconque des revendications 1 ou 2, caractérisée en ce que la rondelle élastique (6) est formée d'une matière métallique et comporte le long de son diamètre intérieur (6.1) des ajours (8) régulièrement répartis, ouverts en direction de la saillie (5) et essentiellement en forme de U.

4. Poulie selon l'une quelconque des revendications 1 à 3, caractérisée en ce que le nombre de languettes élastiques (7) et d'ajours (8) est au moins de trois.

5. Poulie selon l'une quelconque des revendications 3 ou 4, caractérisée en ce que les ajours (8) présentent une profondeur radiale qui est de 0,01 à 0,5 fois l'épaisseur radiale de la poule à rebord (3).

6. Poulie selon la revendication 5, caractérisée en ce que la profondeur radiale est de 1 mm à 10 mm.

7. Poulie selon l'une quelconque des revendications 1 à 6, caractérisée en ce que les languettes élastiques (7) formées par les ajours (8) sont, pour des raisons de fabrication, coudées axialement en sens inverse du sens de montage (9), qui est parallèle à l'axe de révolution (4), et enferment avec l'axe de révolution (4) un angle de 45 à 89°.

8. Poulie selon la revendication 7, caractérisée en ce que l'angle est de 65 à 85°.

9. Poule selon l'une quelconque des revendications 1 à 8, caractérisée en ce que le corps de poulie (1) est formée d'une matière polymère.

10. Poulie selon l'une quelconque des revendications 1 à 9, caractérisée en ce que la saillie (5) présente un diamètre extérieur réduit décalé par rapport à la surface de roulement (2).

11. Poulie selon la revendication 10, caractérisée en ce que la saillie (5) comporte sur le côté opposé à la surface de roulement (2) dans le sens axial un épaulement (10) qui enferme avec l'axe de révolution (4) un angle de 5 à 35°.
